Europäisches Patentamt

European Patent Office

Office européen des brevets

(19)

(11) **EP 1 134 690 B1**

(12) **FASCICULE DE BREVET EUROPEEN**

(45) Date de publication et mention
de la délivrance du brevet:
**07.04.2004 Bulletin 2004/15**

(51) Int Cl.⁷: **G06K 7/00**

(21) Numéro de dépôt: **01410010.1**

(22) Date de dépôt: **26.01.2001**

(54) **Adaptation de la puissance d'émission d'un lecteur de transpondeur électromagnétique**

Sendeleistungsanpassung in einem Leser für elektromagnetische Transponder

Transmission power adaptation in a reader for electromagnetic transponders

(84) Etats contractants désignés:
**DE FR GB IT**

(30) Priorité: **31.01.2000 FR 0001214**

(43) Date de publication de la demande:
**19.09.2001 Bulletin 2001/38**

(73) Titulaire: **STMicroelectronics S.A.**
**92120 Montrouge (FR)**

(72) Inventeur: **Wuidart, Luc**
**83910 Pourrieres (FR)**

(74) Mandataire: **de Beaumont, Michel**
**1, rue Champollion**
**38000 Grenoble (FR)**

(56) Documents cités:
**EP-A- 0 722 094          EP-A- 0 857 981**
**WO-A-99/43096**

**EP 1 134 690 B1**

**Description**

La présente invention concerne des systèmes utilisant des transpondeurs électromagnétiques, c'est-à-dire des émetteurs-récepteurs (généralement mobiles) susceptibles d'être interrogés, sans contact et sans fil, par une unité (généralement fixe) dite borne de lecture. L'invention concerne, plus particulièrement, un lecteur de transpondeur électromagnétique destiné à des transpondeurs dépourvus d'alimentation autonome. Ces transpondeurs extraient l'alimentation nécessaire aux circuits électroniques qu'ils comportent d'un champ haute fréquence rayonné par une antenne de la borne de lecture et d'écriture. L'invention s'applique aussi bien à une borne se contentant de lire les données d'un transpondeur à lecture seule ou à une borne de lecture-écriture propre à modifier des données que contient le transpondeur.

La présente invention concerne, plus particulièrement, l'adaptation de la puissance d'émission d'une borne de lecture-écriture en fonction de la position du transpondeur par rapport à la distance qui le sépare de la borne.

Les systèmes utilisant des transpondeurs électromagnétiques sont basés sur l'emploi de circuits oscillants comprenant un enroulement formant antenne, côté transpondeur et côté borne de lecture-écriture. Ces circuits sont destinés à être couplés par champ magnétique proche lorsque le transpondeur entre dans le champ de la borne de lecture-écriture.

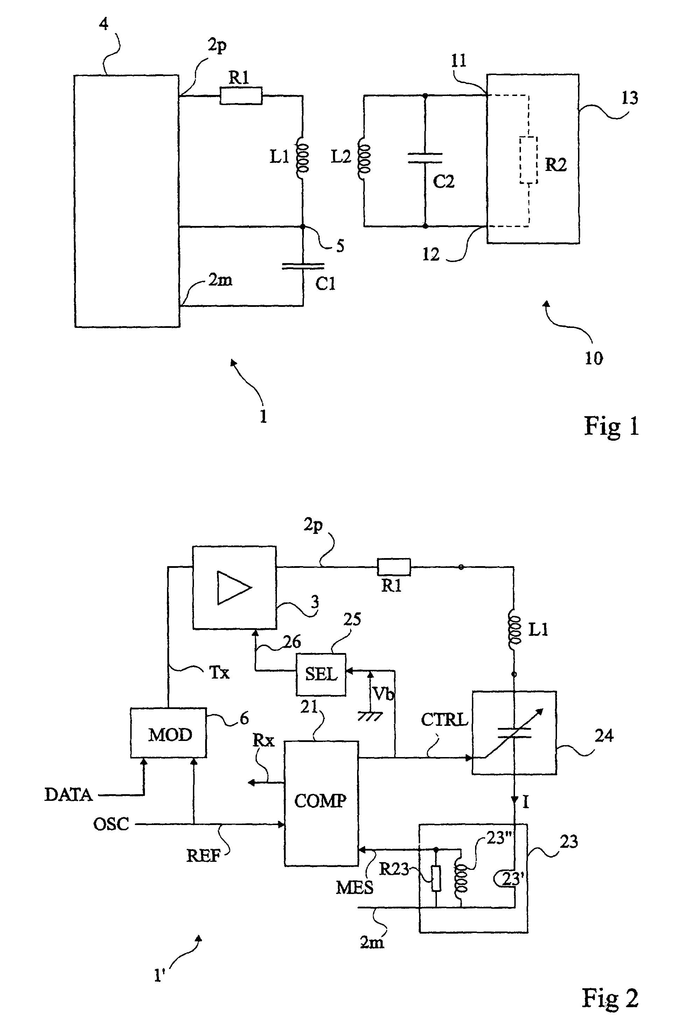

La figure 1 représente, de façon très schématique et simplifiée, un exemple classique de système d'échange de données entre une borne 1 de lecture/écriture et un transpondeur 10 du type auquel s'applique la présente invention.

Généralement, la borne 1 est essentiellement constituée d'un circuit oscillant série, formé d'une inductance L1, en série avec un condensateur C1 et une résistance R1, entre une borne 2 de sortie d'un amplificateur ou coupleur d'antenne (non représenté) et une borne 3 de référence (généralement, la masse). Le coupleur d'antenne fait partie d'un circuit 4 de commande du circuit oscillant et d'exploitation des données reçues comprenant, en autre, un modulateur/démodulateur et un microprocesseur de traitement des commandes et des données. Dans l'exemple représenté à la figure 1, le point 5 de connexion du condensateur C1 et de l'inductance L1 constitue une borne de prélèvement d'un signal de données reçues à destination du démodulateur. Le circuit 4 de la borne communique généralement avec différents circuits d'entrée-sortie (clavier, écran, moyen d'échange avec un serveur, etc.) et/ou de traitement non représentés. Les circuits de la borne de lecture-écriture tirent l'énergie nécessaire à leur fonctionnement d'un circuit d'alimentation (non représenté) raccordé, par exemple, au réseau de distribution électrique.

Un transpondeur 10 destiné à coopérer avec une borne 1, comporte essentiellement un circuit oscillant parallèle formé d'une inductance L2 en parallèle avec un condensateur C2 entre deux bornes 11 et 12 d'entrée d'un circuit 13 de commande et de traitement. Les bornes 11 et 12 sont, en pratique, reliées à l'entrée d'un moyen de redressement (non représenté) dont les sorties constituent des bornes d'alimentation continues des circuits internes au transpondeur.

Le circuit oscillant de la borne 1 est excité par un signal haute fréquence (par exemple, 13,56 MHz) qui, en l'absence de transmission de données de la borne vers le transpondeur, sert exclusivement de source d'énergie à ce dernier. Quand un transpondeur 10 se trouve dans le champ de la borne 1, une tension haute fréquence est engendrée aux bornes 11, 12 du circuit résonnant du transpondeur. Cette tension, après redressement et écrêtement éventuel, est destinée à fournir la tension d'alimentation des circuits électroniques 13 du transpondeur. Ces circuits comprennent généralement, essentiellement, un microprocesseur, une mémoire, un démodulateur des signaux éventuellement reçus de la borne 1, et un modulateur pour transmettre des informations à la borne.

Les circuits oscillants de la borne et du transpondeur sont généralement accordés sur la fréquence d'une porteuse de transmission, c'est-à-dire que la fréquence de résonance est réglée sur une fréquence de, par exemple, 13,56 MHz. Cet accord a pour objet de maximiser la diffusion d'énergie vers le transpondeur, généralement, une carte de format type carte de crédit intégrant les différents constituants du transpondeur.

La porteuse de téléalimentation haute fréquence émise par la borne 1 sert également de porteuse de transmission de données. Cette porteuse est généralement modulée en amplitude par la borne selon différentes techniques de codage de façon à transmettre les données au transpondeur. En retour, la transmission de données du transpondeur vers la borne s'effectue généralement en modulant la charge constituée par le circuit résonnant L2, C2. Cette variation de la charge s'effectue au rythme d'une sous-porteuse de fréquence (par exemple, 847,5 kHz) inférieure à celle de la porteuse. Cette variation de charge peut alors être détectée par la borne sous la forme d'une variation d'amplitude ou d'une variation de phase au moyen, par exemple, d'une mesure de la tension aux bornes du condensateur C1 ou du courant dans le circuit oscillant. La transmission des données, que ce soit de la borne vers le transpondeur ou du transpondeur vers la borne, fait appel à des techniques parfaitement connues qui ne seront pas détaillées plus avant et ne font pas l'objet de la présente invention. On notera simplement que ces transmissions de données utilisent, comme porteuse de transmission, le signal haute fréquence de téléalimentation du transpondeur, même si les données émises par la borne sont modulées sur une sous-porteuse.

La tension récupérée par le transpondeur 10 dans le champ d'une borne 1 dépend de la distance qui sépare le transpondeur de la borne et, plus particulièrement, du coefficient de couplage entre les circuits oscillants respectifs de la borne et du transpondeur. Pour disposer d'un système ayant une portée relativement grande (de l'ordre de 10 à 20 centimètres), on est contraint de délivrer une puissance conséquente aux circuits oscillants de la borne pour que le champ magnétique rayonné reste suffisamment intense à la distance de portée souhaitée pour fournir l'énergie de téléalimentation nécessaire au transpondeur. Toutefois, cela présente l'inconvénient que, quand un transpondeur se trouve près de la borne, il reçoit une énergie beaucoup trop importante par rapport à ses besoins. Outre le fait que cela oblige de prévoir des moyens de protection contre les surcharges côté transpondeur, cela entraîne une surconsommation inutile d'énergie par la borne de lecture-écriture.

Un autre problème qui se pose en raison de la forte énergie rayonnée par la borne est que plusieurs transpondeurs peuvent capter une énergie suffisante de ce champ magnétique rayonné, ce qui peut poser des problèmes de conflit dans les transmissions de données et/ou entraîner un piratage non-autorisé des transmissions de données entre un transpondeur et une borne de lecture-écriture.

Un objet de la présente invention est de pallier les inconvénients des systèmes à transpondeur électromagnétique classiques, liés à la forte énergie rayonnée par une borne de lecture-écriture.

Plus particulièrement, la présente invention vise à optimiser la consommation énergétique d'une borne de lecture-écriture de transpondeur électromagnétique.

L'invention vise également à proposer une solution qui ne nécessite aucune modification du transpondeur et qui soit par conséquent compatible avec les transpondeurs existants.

Pour cela l'invention prévoit une adaptation de la puissance d'émission de la borne de lecture-écriture en fonction de la distance du transpondeur entré dans son champ. Ainsi, selon l'invention, on module l'énergie émise par la borne selon que le transpondeur est plus ou moins loin de celle-ci.

Le document EP-A-0 722 094 prévoit une telle adaptation de l'énergie d'excitation du circuit oscillant d'un lecteur en fonction de la distance à laquelle se trouve un transpondeur et, plus précisément du couplage magnétique entre le transpondeur et le lecteur. La solution préconisée par ce document consiste à déterminer le couplage à partir de la tension aux bornes du circuit oscillant du lecteur, puis à adapter le niveau de sortie du lecteur en conséquence.

Une telle solution n'est pas satisfaisante pour plusieurs raisons.

Tout d'abord, la tension récupérée par le transpondeur (l'énergie prélevée sur le champ rayonné par la borne de lecture-écriture) n'est pas une fonction monotone de la distance. En particulier, pour un type de transpondeurs donné, caractérisé par l'impédance de son circuit résonant, la caractéristique de la tension aux bornes de ce circuit oscillant en fonction du couplage (ou de la distance) présente généralement un maximum à une position de couplage optimal. Par conséquent, un même niveau de tension peut être récupéré par le transpondeur pour deux distances différentes.

De plus, cette caractéristique tension-couplage varie en fonction de l'accord des circuits oscillants (donc de leur fréquence de résonance), c'est-à-dire qu'elle dépend également de l'impédance du circuit oscillant de la borne.

On notera que, côté lecteur, le courant dans le circuit oscillant est fonction, notamment, de la tension récupérée par le transpondeur et du coefficient de couplage.

Les problèmes liés à l'allure non monotone de la tension récupérée par le transpondeur en fonction du couplage ne sont pas résolus par le document EP-A-0 722 094 susmentionné.

Un autre problème est qu'une même borne est susceptible d'être utilisée avec différentes familles de transpondeurs qui se différencient, notamment, par le dimensionnement de leurs composants. Par conséquent, les relations d'asservissement doivent être prévues pour un type de transpondeurs donné et être modifiées à chaque fois que ce type de transpondeur change. Cela peut être le cas, par exemple, si une nouvelle version de transpondeurs vient à remplacer une ancienne version dans un système de contrôle d'accès.

La présente invention vise à proposer une adaptation de l'énergie émise par la borne à destination d'un transpondeur sans qu'il soit nécessaire de procéder à une émission du transpondeur pour évaluer la distance qui sépare ce dernier de la borne.

La présente invention vise également à rendre cette adaptation fiable, même pour une réponse non monotone du transpondeur en fonction de la distance.

La présente invention vise également à permettre un paramétrage automatique de la borne pour la préparer à un type de transpondeurs.

Plus particulièrement, la présente invention prévoit une borne de génération d'un champ électromagnétique propre à coopérer avec au moins un transpondeur lorsque ce dernier entre dans ce champ et comprenant un circuit oscillant propre à recevoir une tension d'excitation alternative haute fréquence, cette borne comportant :

des moyens de régulation de la phase du signal dans le circuit oscillant par rapport à une valeur de référence ;
des moyens pour déterminer une information courante relative au couplage magnétique entre le transpondeur et la borne ;
des moyens pour adapter la puissance du champ électromagnétique en fonction de ladite information courante au moins et

des moyens pour mesurer une première grandeur fonction de la tension (VC1) aux bornes d'un élément capacitif de son circuit oscillant et une deuxième grandeur fonction du courant (I) dans son circuit oscillant.

Selon un mode de réalisation de la présente invention, la borne comporte des moyens pour déterminer et mémoriser des informations caractéristiques relatives au couplage dans plusieurs configurations déterminées de distance séparant le transpondeur de la borne, et pour tenir compte de ces informations caractéristiques dans l'adaptation de la puissance du champ en fonction de l'information courante.

Selon un mode de réalisation de la présente invention, lesdites informations caractéristiques comprennent, entre autres :

la tension aux bornes de l'élément capacitif lorsque aucun transpondeur n'est présent dans le champ de la borne ;
la tension aux bornes de l'élément capacitif lorsque qu'un transpondeur est dans une relation de proximité maximale avec la borne ;
le courant dans le circuit oscillant quand aucun transpondeur n'est présent dans le champ de la borne ; et
le courant dans le circuit oscillant quand un transpondeur est dans une relation de proximité maximale avec la borne.

Selon un mode de réalisation de la présente invention, ladite information courante est déduite de la mesure courante desdites deux grandeurs et des valeurs desdites informations caractéristiques.

Selon un mode de réalisation de la présente invention, au moins une information caractéristique est déterminée automatiquement par la borne dans une phase d'apprentissage.

Selon un mode de réalisation de la présente invention, les moyens pour adapter la puissance du champ électromagnétique comprennent des moyens commandables pour modifier la tension d'excitation alternative du circuit oscillant de la borne.

Selon un mode de réalisation de la présente invention, les moyens pour adapter la puissance du champ électromagnétique comprennent un ou plusieurs éléments résistifs, commandables et faisant partie du circuit oscillant de la borne.

Selon un mode de réalisation de la présente invention, le temps de réponse des moyens de régulation de phase est choisi pour être grand devant la fréquence d'une rétromodulation éventuelle provenant d'un transpondeur présent dans le champ électromagnétique de la borne et pour être rapide par rapport à la vitesse de déplacement d'un transpondeur dans ce champ électromagnétique.

Selon un mode de réalisation de la présente invention, ledit circuit oscillant comprend un élément de capacité variable, ladite borne comprenant des moyens propres à fixer la valeur de cette capacité à partir d'une mesure de phase du signal dans le circuit oscillant en faisant varier la tension aux bornes de l'élément de capacité variable.

La présente invention prévoit également un procédé de commande d'une borne, consistant à :

a) dans une phase d'apprentissage :

déterminer une première information caractéristique liée au courant dans le circuit oscillant quand aucun transpondeur n'est présent dans le champ de la borne ;
déterminer une deuxième information caractéristique liée au courant dans le circuit oscillant quand un transpondeur est dans une relation de proximité maximale avec la borne ;
calculer des relations linéaires d'asservissement de la puissance du champ magnétique en fonction de ladite information courante et d'une valeur nominale prédéterminée ; et

b) en fonctionnement :

déterminer l'information courante liée au couplage entre un transpondeur entré dans le champ de la borne et celle-ci ; et
adapter la puissance du champ magnétique à partir desdites relations linéaires.

Selon un mode de réalisation de la présente invention, ladite information courante est fonction du rapport entre le coefficient de couplage magnétique courant et le coefficient de couplage magnétique maximal obtenu quand un transpondeur est dans une relation de proximité maximale avec la borne.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 représente, de façon très schématique et simplifiée, un système à transpondeur électromagnétique du type auquel s'applique la présente invention ;

la figure 2 représente, sous forme de blocs, un mode de réalisation d'une borne d'un système à transpondeur électromagnétique selon la présente invention ;

la figure 3 représente un exemple général d'évolution de la tension aux bornes du circuit oscillant d'un transpondeur en fonction de la distance le séparant d'une borne ;

la figure 4 représente un exemple de réponse du procédé d'asservissement de la présente invention ;

la figure 5 représente un premier exemple de réponse d'un transpondeur dans un mode de mise en oeuvre de la présente invention ; et

la figure 6 représente un deuxième exemple de réponse d'un transpondeur dans un mode de mise en oeuvre de la présente invention.

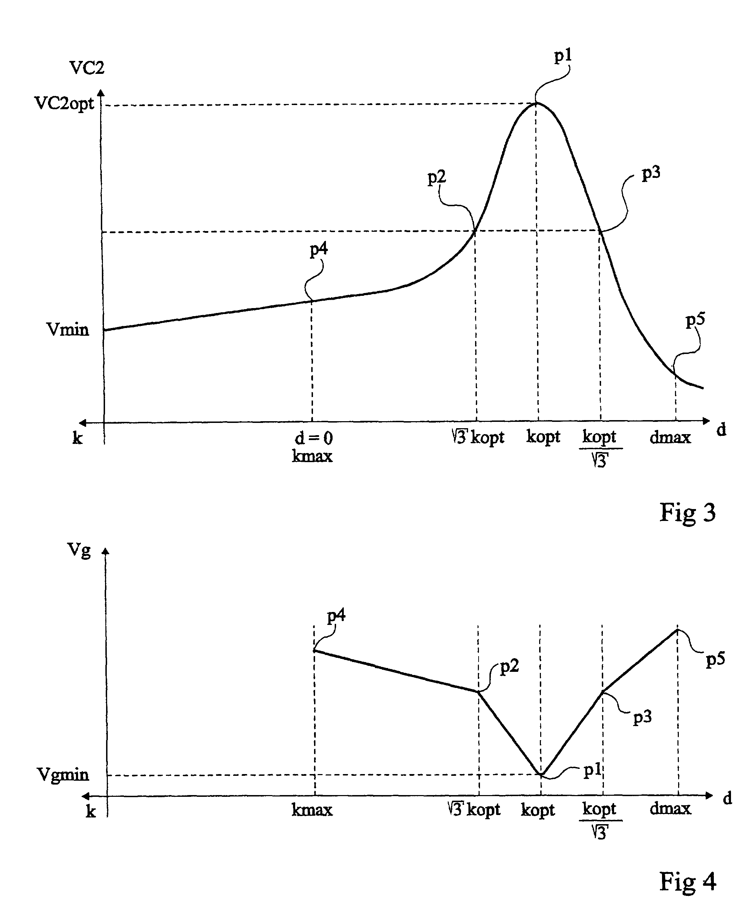

Les mêmes éléments ont été désignés par les mêmes références aux différentes figures qui, notamment pour les figures 3 à 6, ont été tracés sans respect d'échelle. Pour des raisons de clarté, seuls les éléments nécessaires à la compréhension de l'invention ont été représentés aux figures et seront décrits par la suite. En particulier, la structure d'un transpondeur n'a pas été détaillée de même que la structure des éléments de traitement des données numériques côté borne de lecture.

Une caractéristique de la présente invention est de modifier l'énergie d'excitation du circuit oscillant d'une borne de lecture-écriture en fonction de la distance d'un transpondeur entré dans le champ de la borne, évaluée au moyen du signal à la fréquence de la porteuse de téléalimentation. Le fait d'utiliser directement l'information de la porteuse de téléalimentation permet d'effectuer une évaluation de la distance sans qu'il soit nécessaire que le transpondeur émette lui-même des informations. En effet, lorsqu'il entre dans le champ d'une borne, un transpondeur intervient sur la charge du circuit oscillant de cette borne. Cette variation de charge dépend, notamment, de la distance qui sépare le transpondeur de la borne. La modification de l'énergie est effectuée, selon l'invention, en agissant sur le courant dans le circuit oscillant série, c'est-à-dire dans l'antenne (l'inductance L1) de la borne. Cette action peut être effectuée, soit en modifiant la tension dite de générateur, c'est-à-dire la tension de sortie de l'amplificateur 3, soit en modifiant la valeur de la résistance R1.

Pour disposer de l'information de distance, une solution de l'invention est de mesurer, entre autres, l'amplitude du signal (par exemple, l'amplitude de la tension aux bornes du condensateur C1, figure 1). Comme cela a été indiqué précédemment, une telle mesure est en pratique inexploitable avec une borne classique, notamment car la plage de variation de tension en fonction de la distance dépend de l'accord du circuit oscillant, donc de la valeur de la capacité C1. Or, dans les circuits classiques, l'accord n'est jamais parfait.

En particulier, dans les bornes classiques, l'accord de la fréquence de résonance à la fréquence de la porteuse est effectué manuellement au moyen d'un condensateur variable, une fois la borne fabriquée. On a besoin d'ajuster l'accord, notamment, en raison des tolérances de fabrication des éléments capacitifs et inductifs, pour garantir le point de fonctionnement en phase choisi entre un signal de référence délivré par un oscillateur de la borne et le signal reçu prélevé, par exemple, aux bornes du condensateur C1. Un désaccord du circuit oscillant de la borne a plusieurs conséquences et, en particulier, celle de modifier l'amplitude du signal dans ce circuit oscillant et, par voie de conséquence, l'amplitude disponible du signal pour une évaluation éventuelle.

Ainsi, une autre caractéristique de la présente invention est de prévoir une régulation de la phase du circuit oscillant de la borne par rapport à une valeur de référence. Selon l'invention, cette régulation de phase est effectuée au moyen d'une boucle dont le temps de réponse est choisi pour que la boucle soit suffisamment lente afin de ne pas gêner la rétromodulation provenant d'un transpondeur et soit suffisamment rapide devant la vitesse de passage d'un transpondeur dans le champ de la borne. On peut parler de régulation statique par rapport aux fréquences de modulations (par exemple, la fréquence de la porteuse de téléalimentation de 13,56 MHz et la fréquence de rétromodulation de 847,5 kHz utilisée dans la transmission de données du transpondeur vers la borne).

La figure 2 représente, sous forme de blocs, un mode de réalisation d'une borne 1' selon la présente invention, équipée d'une boucle de régulation de phase du circuit oscillant.

De façon classique, la borne 1' comporte un circuit oscillant formé d'une inductance ou antenne L1, en série avec un élément capacitif 24 et un élément résistif (symbolisé par une résistance R1), entre une borne 2p de sortie d'un amplificateur ou coupleur d'antenne 3 et une borne 2m à un potentiel de référence (généralement, la masse). L'amplificateur 3 reçoit un signal Tx de transmission haute fréquence, issu d'un modulateur 6 (MOD) qui reçoit une fréquence de référence (signal OSC) par exemple, d'un oscillateur à quartz (non représenté). Le modulateur 4 reçoit, si besoin, un signal DATA de données à transmettre et, en l'absence de transmission de données depuis la borne, délivre la porteuse haute fréquence (par exemple, 13,56 MHz) propre à téléalimenter un transpondeur.

Une caractéristique de l'invention est que l'élément capacitif 24 est un élément à capacité variable et commandable par au moins un signal CTRL. Selon l'invention, on réalise une régulation de la phase du courant dans l'antenne L1 par rapport à un signal de référence REF. Cette régulation est une régulation du signal haute fréquence, c'est-à-dire du signal de la porteuse correspondant au signal Tx en l'absence de données à transmettre. Cette régulation est effectuée en faisant varier la capacité du circuit oscillant de la borne 1' de façon à maintenir le courant dans l'antenne en relation de phase constante avec le signal de référence. Le signal REF est à la fréquence de la porteuse et correspond, par exemple, au signal OSC fourni par l'oscillateur du modulateur.

La capacité variable peut être réalisée de plusieurs façons. Généralement, cette capacité doit atteindre quelques centaines de picofarads et supporter, à ses bornes, une tension de plus de 100 Volts. Une première solution est d'utiliser un réseau de capacités commutées. Toutefois, un inconvénient est alors que, sauf à concevoir un circuit encombrant eu égard au nombre de condensateurs, la variation est loin d'être linéaire. Une deuxième solution est d'utiliser une diode dont on utilise la capacité de la jonction polarisée en inverse en tant que capacité variable qui est fonction de cette polarisation. La diode est alors connectée, par son anode, côté borne 2m de référence et, par sa cathode, côté inductance L1. Une troisième solution est d'utiliser un transistor MOSFET monté en diode. Un tel composant a sensiblement la même caractéristique capacité-tension que celle d'une diode. L'avantage est que, pour une même tenue en tension d'avalanche, la surface d'intégration nécessaire est moindre que pour une diode.

Comme l'illustre la figure 2, l'élément capacitif 24 prévu en série avec la résistance R1 et l'inductance L1 est commandable au moyen du signal CTRL. Le signal CTRL est issu d'un circuit 21 (COMP) dont le rôle est de détecter l'écart de phase par rapport au signal de référence REF et de modifier en conséquence la capacité de l'élément 24.

La mesure de la phase dans le circuit oscillant est effectuée, par exemple, à partir d'une mesure du courant I dans ce circuit oscillant. On utilise, par exemple dans le mode de réalisation illustré par la figure 2, un circuit 23 constitué d'un transformateur d'intensité monté en série avec l'élément 24 et l'inductance L1. Un tel transformateur d'intensité est généralement constitué d'un enroulement primaire 23' entre l'élément 24 et la borne 2m de masse, et d'un enroulement secondaire 23" dont une première borne est connectée directement à la masse 2m et dont l'autre borne délivre un signal MES fournissant le résultat de la mesure, une résistance R23 de conversion courant-tension étant connectée en parallèle avec l'enroulement secondaire 23".

Le résultat MES de la mesure est envoyé au comparateur de phase 21 qui compare alors la phase du courant mesuré par le bloc 23 au signal de référence REF, et asservit en conséquence l'élément capacitif 24 au moyen du signal CTRL.

Selon un mode de réalisation préféré, le comparateur 21 utilise le même démodulateur de phase (non représenté) que celui servant à démoduler le signal provenant du transpondeur et que reçoit éventuellement le circuit oscillant. Par conséquent, comme l'illustre la figure 2, le comparateur 21 délivre un signal Rx restituant une rétromodulation éventuelle de données reçues d'un transpondeur.

On notera que la boucle de régulation de phase doit être suffisamment lente pour ne pas gêner la modulation de phase à 847,5 kHz effectuée depuis le transpondeur mais suffisamment rapide devant la vitesse de passage d'un transpondeur dans le champ de la borne, qui est généralement liée à la vitesse de déplacement d'une main. Par exemple, un temps de réponse de l'ordre d'une milliseconde convient, le temps de passage d'un transpondeur étant de plusieurs centaines de millisecondes.

Un premier avantage de la présente invention est que, en régulant la phase du circuit oscillant sur une valeur de référence, on s'affranchit à la fois des problèmes éventuels des tolérances de dimensionnement des composants du circuit oscillant, et de la dérive de ces composants en fonctionnement.

Selon l'invention, on utilise l'information de correction de la boucle de régulation de phase, c'est-à-dire une information liée à la tension aux bornes du condensateur 24 (en pratique associé au transformateur 23 dont on peut négliger la présence), pour évaluer la position du transpondeur.

Selon un mode de réalisation où l'élément capacitif 24 est commandé en tension, l'information de correction est prélevée directement en sortie du régulateur de phase, c'est-à-dire sous la forme du niveau de tension du signal CTRL. Ainsi, selon ce mode de réalisation, la borne 1' comporte un module 25 (SEL) de sélection de la quantité d'énergie en fonction, entre autres, de la tension Vb de correction de la boucle de phase.

Selon un autre mode de réalisation, on utilise un élément distinct du régulateur de phase pour évaluer la tension aux bornes du condensateur 24. L'utilisation de l'information de correction présente toutefois l'avantage d'optimiser le circuit.

En pratique et comme on le verra par la suite, on mesure de préférence la valeur du courant I (en variante, une valeur liée de façon linéaire et connue) dans le circuit oscillant de la borne et la valeur de la tension VC1 (en variante, une valeur liée de façon linéaire et connue) aux bornes du condensateur 24. Cela permet, notamment, de s'affranchir des problèmes liés au fait que la réponse du transpondeur n'est pas monotone.

Dans l'exemple de la figure 2, le module 25 agit sur le niveau de la tension de générateur par un signal de commande 26. Selon un autre mode de réalisation préféré, le module 25 agit sur l'élément résistif R1 pour en modifier la valeur. Dans ce cas, on utilise, par exemple, un réseau de résistances commutables, ou un ou plusieurs transistors MOSFET dont on fait varier la résistance à l'état passant en modifiant leurs tensions de grille.

Quel que soit le mode de réalisation, on notera que le module 25 agit de préférence pour modifier sensiblement linéairement l'énergie d'émission en fonction de la consigne. Toutefois, on pourra avoir recours à une variation par palier, par exemple si l'élément résistif est formé d'un réseau de résistances commutables ou si le module 25 effectue une conversion analogique-numérique ou reçoit une information numérique.

Une autre caractéristique de la présente invention est de prévoir un paramétrage automatique de la borne, pour adapter l'asservissement de l'énergie sur la distance à laquelle se trouve un transpondeur, en fonction du type de transpondeur. Ce paramétrage automatique s'effectue dans une phase d'apprentissage et sera mieux compris après l'exposé qui suit de la relation entre le couplage des circuits oscillants et la distance qui les sépare.

La figure 3 représente l'évolution de la tension VC2 aux bornes 11, 12 d'un transpondeur en fonction de la distance d séparant le transpondeur d'une borne de lecture-écriture. La courbe de la figure 3 peut également être considérée comme représentant l'évolution de la tension VC2 en fonction du coefficient de couplage k (toujours compris entre 0 et 1) entre les circuits oscillants du transpondeur et de la borne, comme le montrera la formule 5 exposée par la suite. En effet, le couplage entre les circuits oscillants est fonction de la distance qui sépare les antennes. Plus précisément, la distance qui sépare les antennes est, en première approximation, proportionnelle à 1-k. Par conséquent, dans la description qui suit, on fera référence soit à la distance soit au coefficient de couplage comme abscisse de la caractéristique de la figure 3. L'axe des abscisses représente une distance d croissante vers la droite de la figure et un coefficient de couplage k croissant vers la gauche de la figure.

Comme l'illustre la figure 3, la tension VC2 présente un maximum $VC2_{opt}$ pour une valeur optimale du coefficient de couplage $k_{opt}$. Pour une fréquence et un dimensionnement donné des circuits oscillants, la tension VC2 diminue de part et d'autre de la position p1 de couplage optimal.

La courbe présente un point d'inflexion p2 pour une valeur de couplage de $k_{opt}.\sqrt{3}$, c'est-à-dire pour une distance inférieure à la position de couplage optimal. Côté distances encore inférieures, la courbe tend vers une asymptote à une position de tension minimale $V_{min}$. Côté distances supérieures à la position de couplage optimal, la décroissance de la tension VC2 est plus prononcée. En outre, on constate que le niveau de tension (dont on peut montrer qu'il est égal à $VC2_{opt} \cdot \sqrt{3} / 2$) du point d'inflexion p2 à $k_{opt}.\sqrt{3}$ se retrouve, symétriquement par rapport à la position de couplage optimal, en un point p3 correspondant à une valeur de couplage de $k_{opt} / \sqrt{3}$.

La courbe de la figure 3 est une courbe théorique, c'est-à-dire que pour un système de transmission donné, toute la courbe n'est pas décrite (parcourue) par les positions de couplage. En effet, deux points supplémentaires sont nécessaires pour définir la relation pour un type de transpondeurs donné.

Un premier point p4 correspond à une position de couplage maximal $k_{max}$ ou de distance nulle. Cette position est définie par le couplage obtenu lorsque la distance séparant les deux antennes est minimale, c'est-à-dire quand le transpondeur est posé sur la borne (à l'endroit repéré comme étant la position de l'inductance L1). Il ne s'agit pas réellement d'une distance nulle entre les deux antennes mais plutôt d'une distance minimale. En effet, les antennes L1 et L2 ne peuvent pas se toucher, ne serait-ce qu'à cause du boîtier du lecteur et du boîtier du transpondeur (matériau enrobant les pistes d'antenne pour une carte à puce). Cette position peut être située à un point quelconque de la caractéristique de la figure 3. On notera que la position de couplage maximal ne correspond qu'exceptionnellement à la position où la tension récupérée prend la valeur maximale, c'est-à-dire au couplage optimal.

Un deuxième point p5 correspond à la limite de portée du système. La position du point p5 varie en fonction de la constitution du transpondeur. Il s'agit du point où le transpondeur décroche pour défaut d'énergie. Le point p5 est, par exemple, fixé à partir de normes qui déterminent l'énergie maximale que doit émettre la borne et qui conditionnent la portée du système. On notera que plus la tension $VC2_{(p5)}$ au point p5 est faible, plus la portée du système est grande et plus on a intérêt à diminuer le champ quand le transpondeur s'approche de la borne.

Selon l'invention, on tient compte de la courbe de la figure 3 pour asservir l'énergie d'émission sur la distance (donc le couplage) entre le transpondeur et la borne. Le couplage entre les circuits oscillants est notamment fonction du courant I dans le circuit oscillant série de la borne (par exemple, mesuré par le transformateur 23). Or, ce courant I est lié, par la relation suivante, à la tension Vg dite de générateur et à l'impédance apparente $Z1_{app}$ du circuit oscillant :

$$I = \frac{Vg}{Z1_{app}}. \hspace{4cm} \text{(formule 1)}$$

Or, l'impédance apparente $Z1_{app}$ est, entre autres, fonction de la résistance R1. Par conséquent, on peut intervenir sur le couplage, donc sur la tension VC2 récupérée par le transpondeur, en modifiant soit la valeur de Vg soit la valeur de R1, soit les deux.

De plus, le fait de réguler la phase du circuit oscillant sur une valeur de référence permet que la variation de distance d'un transpondeur entrant dans le champ de la borne ne se traduise que par une modification de la partie réelle de l'impédance de ce circuit oscillant. En effet, toutes les variations qui auraient tendance à modifier la partie imaginaire de cette impédance par la charge constituée par le transpondeur sont compensées par la boucle de régulation de phase. Ainsi, par l'asservissement de la phase au moyen du système de régulation, on s'assure que, en fonctionnement statique (c'est-à-dire pour les fréquences inférieures à la fréquence de la sous-porteuse) la partie imaginaire de l'impédance $Z1_{app}$ soit nulle. Par conséquent, l'impédance $Z1_{app}$ devient égale à la résistance apparente $R1_{app}$ et peut s'exprimer sous la forme :

$$Z1_{app} = R1_{app} = R1 + a^2 \frac{L2}{R2 \cdot C2}, \qquad \text{(formule 2)}$$

avec :

$$a^2 = \frac{k^2 \cdot \omega^2 \cdot L1 \cdot L2}{X2^2 + \left(\frac{L2}{R2 \cdot C2}\right)^2}, \qquad \text{(formule 3)}$$

et où $\omega$ représente la pulsation, $X2$ représente la partie imaginaire de l'impédance du circuit oscillant du transpondeur ($X2 = \omega L2 - 1/\omega C2$), et où $R2$ représente la charge constituée par les circuits du transpondeur sur son propre circuit oscillant, modélisée en figure 1 par une résistance $R2$ représentée en pointillés, en parallèle avec l'inductance $L2$ et le condensateur $C2$. En d'autres termes, la résistance $R2$ représente la résistance équivalente de tous les circuits (microprocesseur, moyen de rétromodulation, etc.) du transpondeur, ramenée en parallèle sur le condensateur $C2$ et l'inductance $L2$. Dans la formule 2 ci-dessus, on a négligé la résistance série de l'inductance $L1$ qui s'ajoute aux deux autres termes. On peut également considérer que la valeur de cette résistance série est, par simplification, incluse dans la valeur de la résistance $R1$.

On peut considérer que, en première approximation (au 1er ordre), la partie imaginaire $X2$ de l'impédance du circuit oscillant du transpondeur est nulle. Cela est dû au fait que l'on est à l'accord et que, par construction, les composants du transpondeurs sont dimensionnés pour que la fréquence de résonance du circuit oscillant corresponde à la fréquence de la porteuse de téléalimentation.

Par conséquent, en combinant les formules 1, 2 et 3, la relation liant le coefficient de couplage $k$ au courant $I$, à la tension $Vg$ et à la résistance $R1$ est la suivante :

$$k = \sqrt{\frac{L2}{L1 \cdot R2} \cdot \left(\frac{Vg}{I} - R1\right)}. \qquad \text{(formule 4)}$$

Pour être capable d'adapter la puissance d'émission en fonction du couplage entre les circuits oscillants, on doit alors être capable de situer la position courante du transpondeur sur une courbe du type de celle représentée en figure 3. Toutefois, asservir l'énergie en tenant compte de l'ensemble de la courbe conduit à une solution qui requiert de déterminer, pour une famille de transpondeurs donnée, l'allure exacte de cette courbe et de la mémoriser. De plus, une aussi grande précision dans la correction de l'asservissement n'est pas toujours nécessaire. Ainsi, selon un mode de réalisation préféré de la présente invention, l'asservissement de l'énergie est effectué à partir de relations linéaires déduites d'un nombre minimal de points caractéristiques.

Plus précisément, on utilise entre trois et cinq points caractéristiques de l'allure de la tension $VC2$ en fonction du couplage $k$ pour définir au maximum quatre plages de variations linéaires de l'énergie en fonction du couplage. Ces cinq points correspondent, respectivement, aux trois points caractéristiques fonctions du coefficient $k_{opt}$ de la courbe de la figure 3, respectivement p1 à $k_{opt}$, p2 à $k_{opt}.\sqrt{3}$ et p3 à $k_{opt}/\sqrt{3}$, au point p4 fonction de la distance minimale (du coefficient de couplage maximal $k_{max}$) et au point p5 correspondant à la limite de portée du système et à l'énergie maximale admissible en émission d'une borne (généralement fixée par des normes).

La figure 4 représente l'allure de la correction d'énergie effectuée, selon l'invention à partir de la courbe théorique de la figure 3, en fonction du couplage. Cette correction consiste à modifier, en fonction du couplage $k$, par exemple le niveau de tension $Vg$ pour maintenir un niveau de tension $VC2$ (figure 3) nominal approximativement constant. Selon l'invention, cet asservissement s'effectue en fonction de la position du couplage $k$ par rapport aux points caractéristiques p1 à p5 et par tronçons linéaires entre ces points.

La figure 4 n'est tracée qu'entre les valeurs kmax et dmax correspondant aux extrémités possibles de la caractéristique. De plus, le tracé de la figure 4 se base sur la courbe théorique de la figure 3 avec une position du point p4 à gauche du point p2.

La relation qui lie la tension de générateur $Vg$ à la tension $VC2$ est la suivante :

$$VC2 = \frac{k \cdot \sqrt{\frac{L1}{L2}} \cdot R2 \cdot Vg}{R1 + k^2 \frac{L1 \cdot R2}{L2}}. \qquad \text{(formule 5)}$$

Une première solution, pour être en mesure de fixer les tronçons rectilignes de correction de la figure 4, consiste à utiliser l'expression du coefficient de couplage optimal $k_{opt}$ en fonction des inductances L1, L2, et des résistances R1 et R2. En effet, la relation qui lie le coefficient de couplage optimal $k_{opt}$ et les composants des circuits oscillants est la suivante :

$$k_{opt} = \sqrt{\frac{L2 \cdot R1}{R2 \cdot L1}}. \qquad \text{(formule 6)}$$

En reportant cette expression dans la formule 4 ci-dessus, on pourrait obtenir la relation suivante permettant de déterminer un coefficient de couplage courant à partir du coefficient $k_{opt}$ et des valeurs de Vg, I et R1 :

$$k = k_{opt} \cdot \sqrt{\frac{Vg}{I \cdot R1}} - 1. \qquad \text{(formule 7)}$$

De plus, en combinant les formules 5 et 6, on peut obtenir la relation suivante entre la tension VC2 et le couplage $k_{opt}$ :

$$VC2 = \frac{k}{k_{opt}} \cdot \sqrt{\frac{R2}{R1}} \cdot \frac{Vg}{1 + \left(\frac{k}{k_{opt}}\right)^2}. \qquad \text{(formule 8)}$$

Or, au point p1 de couplage optimal, la tension $VC2_{opt}$ est donnée par la relation :

$$VC2_{opt} = \frac{Vg}{2} \cdot \sqrt{\frac{R2}{R1}}. \qquad \text{(formule 9)}$$

En reportant cette expression dans la formule 8 ci-dessus, on peut alors exprimer la tension VC2 en fonction du couplage optimal :

$$VC2 = \frac{2 \cdot VC2_{opt}}{\dfrac{k_{opt}}{k} + \dfrac{k}{k_{opt}}}. \qquad \text{(formule 10)}$$

Toutefois, cette solution ne constitue pas un mode de réalisation préféré car elle pose des problèmes de mise en oeuvre. Tout d'abord, la résistance R2 varie au cours du fonctionnement (de même que la résistance R1 selon l'asservissement prévu par l'invention). Mais surtout, cette détermination est, en pratique, quasi-impossible par apprentissage, car la position au couplage optimal n'est pas aisément identifiable par la borne. En outre, pour une mesure du courant I côté borne, il y a deux possibilités de coefficient de couplage selon que le transpondeur se situe plus près ou plus loin de la borne par rapport à la position de couplage optimal.

Ainsi, selon l'invention, on tire profit de l'existence de conditions de fonctionnement caractéristiques aisément déterminables, notamment par apprentissage, pour modéliser la réponse du système en fonction du couplage et pour simplifier l'asservissement.

Une première condition correspond au fonctionnement à vide de la borne, c'est-à-dire au courant $I_{vide}$ quand aucun transpondeur n'est présent dans le champ de la borne. Dans ce fonctionnement à vide, l'impédance apparente $Z1_{vide}$ du circuit oscillant de la borne ne dépend plus que des composants R1, L1 et C1 de la borne. De plus, comme grâce à la régulation de phase, la partie imaginaire de cette impédance est toujours nulle. Par conséquent :

$$I_{vide} = \frac{Vg}{R1}.$$ (formule 11)

Une deuxième condition aisément déterminable correspond au couplage maximal $k_{max}$ où la mesure de courant $I_{max}$ dans le circuit oscillant de la borne peut être prise alors qu'un transpondeur de la famille concernée est posé sur la borne.

En appliquant la formule 7 ci-dessus à la position de couplage maximal et en y incorporant la valeur du courant à vide d'après la formule 11 ci-dessus, on obtient :

$$k_{max} = k_{opt} \cdot \sqrt{\frac{I_{vide}}{I_{max}}} - 1.$$ (formule 12)

On voit donc que le rapport entre les coefficients de couplage optimal et maximal ne dépend que des courants I à vide et au couplage maximal.

De plus, les inventeurs ont constaté que toutes les relations fonctionnelles du circuit peuvent s'exprimer de façon particulièrement simple en fonction du rapport $k/k_{max}$. Or, déterminer le coefficient $k_{max}$ revient à positionner le point p4 sur la courbe de la figure 3, donc à déterminer si le point p4 est à gauche ou à droite (dans la représentation de la figure 3) du point p1 de couplage optimal. Cette détermination qui s'effectue simplement en appliquant la formule 12 ci-dessus permet de déterminer si, dans l'application considérée, on est en présence d'une caractéristique VC2 = f(k) (figure 3) à inversion de pente ou monotone. En effet si le rapport $k_{opt}/k_{max}$ est inférieur à 1, la caractéristique est à inversion de pente. Si, à l'inverse, $k_{opt}/k_{max}$ est supérieur à 1, la caractéristique est monotone. On notera que, dans ce dernier cas, la position de couplage optimal ne peut pas être atteinte.

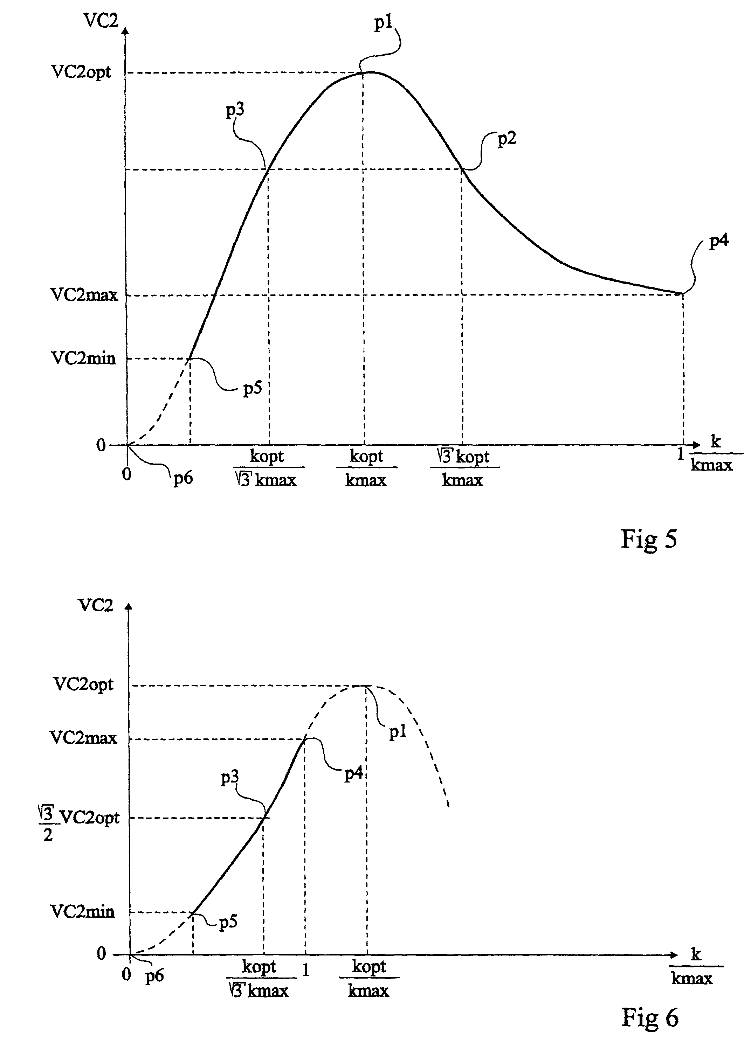

La figure 5 représente la caractéristique de la tension VC2 en fonction du rapport $k/k_{max}$ pour un système où $k_{opt}/k_{max}$ est inférieur à l'unité. Cette caractéristique commence au point p5 et est donc retournée (k croissant vers la droite) par rapport à la caractéristique de la figure 3. On notera que, de préférence, le point p5 ne correspond pas au fonctionnement à vide de la borne, c'est-à-dire au point d'abscisse et d'ordonnée nulles en figure 4. En effet, le point p5 de limite de portée correspond au couplage (pas forcément nul) où le transpondeur "décroche", c'est-à-dire, n'est plus suffisamment alimenté. Au point p4 de couplage maximal, l'abscisse est 1 (k = $k_{max}$). Comme on a déterminé le rapport $k_{opt}/k_{max}$, on connaît les abscisses des cinq points caractéristiques p1 à p5. On notera que la détermination du point p3 est optionnelle.

Une autre caractéristique préférée de l'invention est, au lieu de chercher à déterminer les valeurs absolues de la tension VC2 aux points p1 à p5, d'utiliser des valeurs relatives, c'est-à-dire des rapports, de cette tension. En effet, ce qui importe surtout, c'est de déterminer les pentes de correction à appliquer.

L'exposé qui suit permettant la détermination, selon l'invention, des corrections à apporter à l'énergie d'émission en fonction du couplage instantané k est effectué en considérant que l'on fait varier la tension de générateur Vg (à R1 constant). On notera cependant que les grandeurs Vg et R1 sont liées l'une à l'autre comme on le verra par la suite, de sorte que l'on pourra transposer cet exposé à une variation de la résistance R1 (à Vg constante).

Tout d'abord, on sait les tensions $VC2_{(p2)}$ et $VC2_{(p3)}$ aux points p2 et p3 sont liées à la tension $VC2_{opt}$ au point p1 de couplage optimal par la relation :

$$VC2_{(p2)} = VC2_{(p3)} = VC2_{opt} \cdot \frac{\sqrt{3}}{2}.$$ (formule 13)

De plus, en appliquant la formule 10 au point p4 de couplage maximal, on obtient la relation suivante, dépendant du rapport $k_{opt}/k_{max}$ qui est connu et d'une valeur $VC2_{max}$ que l'on pourra relier, comme on le verra par la suite, à l'énergie d'émission au point p1.

$$VC2_{max} = \frac{2 \cdot VC2_{opt}}{\dfrac{k_{opt}}{k_{max}} + \dfrac{k_{max}}{k_{opt}}}.$$ (formule 14)

On notera que la valeur $VC2_{max}$ ne correspond pas à la valeur maximale prise par la tension VC2, cette valeur maximale étant $VC2_{opt}$. On voit donc que le rapport entre les tensions VC2 aux points p1 et p4 est connu à partir des seules mesures d'apprentissage. Bien entendu, toutes les déterminations de l'apprentissage s'effectuent sans asservissement, c'est-à-dire que l'énergie d'émission est, pendant l'apprentissage, maintenue à son niveau nominal côté borne (Vg et R1 sont constants).

La seule valeur dont le rapport ne peut pas être exprimé à partir de la tension $VC2_{opt}$ est la valeur $VC2_{min}$ au point p5 de limite de portée. En effet, cette position dépend de la tension minimale que doit recevoir le transpondeur pour fonctionner.

Une première solution serait d'introduire cette valeur dans la borne pour qu'elle soit disponible pour les calculs de génération des pentes lorsque l'on dédie cette borne à une famille de transpondeurs.

Toutefois, selon un mode de réalisation préféré de l'invention, on cherche à minimiser l'introduction de valeurs dans la borne et à se contenter de l'apprentissage. On notera que, au point p6 d'origine de la courbe VC2 = f(k), il n'y a plus de couplage et la tension VC2 est nulle. Ainsi, selon l'invention, on considère que la pente varie peu entre les points p6 et p3 et on considère un seul tronçon de correction. On notera que, dans un mode de réalisation simplifié, on considère même qu'un tronçon de correction suffit entre les points p1 et p6.

Or, en appliquant la formule 7 à la position de couplage optimal et en y incorporant la valeur du courant à vide d'après la formule 11, on en déduit que le courant à vide $I_{vide}$ correspond au double du courant au couplage optimal $I_{opt}$. Cette relation ne permet pas d'en déduire une relation entre les tensions $VC2_{opt}$ et $VC2_{min}$. Toutefois, l'énergie d'excitation est liée au courant I qui est lui-même proportionnel au paramètre d'ajustement (formule 1), par exemple la tension Vg. Par conséquent, en terme de correction à apporter pour asservir la tension de générateur afin de maintenir une tension VC2 approximativement constante, on peut dire que la tension de générateur $Vg_{(p1)}$ au point p1 de couplage optimal (qui correspond à la valeur minimale $Vg_{min}$ de la tension Vg), doit être égale à la moitié de la tension de générateur $Vg_{(p6)}$ au point p6 de fonctionnement à vide. Or, comme on l'a indiqué précédemment, l'énergie d'émission maximale de la borne est connue (donc la tension de générateur maximale $Vg_{max}$), par exemple en étant fixée par des normes. Lorsque le système est à vide, la tension $Vg_{(p6)}$ ne peut donc pas dépasser cette valeur $Vg_{max}$. Selon ce mode de réalisation de l'invention, on fixe alors la tension $Vg_{(p6)}$ à une valeur $Vg_{nom}$ inférieure ou égale à cette valeur $Vg_{max}$. Cela suffit pour déterminer les fonctions de correction à appliquer à cette tension $Vg_{nom}$ en fonction du coefficient de couplage k ou d'une information analogue. En effet, on peut alors déterminer les pentes de correction de la courbe de la figure 4.

Dans une caractéristique Vg = $f(k/k_{max})$, permettant d'asservir la tension Vg pour obtenir une valeur nominale approximativement constante de la tension VC2 récupérée par un transpondeur, on peut déduire de l'exposé ci-dessus les coordonnées des points p1, p2, p4, p6 et, éventuellement p3 en fonction du rapport $k/k_{max}$ et de la tension $Vg_{nom}$ :

-  le point p6 a pour coordonnées 0 (à vide) et $Vg_{nom}$ ;
-  le point p1 a pour coordonnées $k_{opt} / k_{max}$ et $Vg_{min} = Vg_{nom} / 2$ ;
-  le point p2 a pour coordonnées $\sqrt{3} \cdot kopt / k_{max}$ et $Vg_{nom} / \sqrt{3}$ ;
-  le point p4 a pour coordonnées 1 (carte sur la borne) et

$$\mathtt{Vg_{nom}} \cdot \left( \frac{\mathtt{k_{opt}}}{\mathtt{k_{max}}} + \frac{\mathtt{k_{max}}}{\mathtt{k_{opt}}} \right) / \ \mathbf{4} \ ;$$

et
-  le point p3 éventuel a pour coordonnées $k_{opt} / (\sqrt{3} \cdot k_{max})$ et $Vg_{nom} / \sqrt{3}$.

A partir de ces coordonnées, on peut établir les relations de la caractéristique d'asservissement en fonction de la valeur courante du rapport $k/k_{max}$. En prenant l'exemple illustré par la figure 4 où $I_{vide}$ est supérieur ou égal à $I_{max}$, on pourra, par exemple, appliquer les relations suivantes :

-  pour $k/k_{max} < k_{opt} / (k_{max} \cdot \sqrt{3})$ :

$$\mathtt{Vg} \ = \ \mathtt{Vg_{nom}} \cdot \left( \frac{1}{\sqrt{3}} + \frac{1 - \dfrac{1}{\sqrt{3}}}{\dfrac{1}{\sqrt{3}}} \cdot \frac{\mathtt{k_{max}}}{\mathtt{k_{opt}}} \cdot \left( \frac{\mathtt{k_{opt}}}{\mathtt{k_{max}} \cdot \sqrt{3}} - \frac{\mathtt{k}}{\mathtt{k_{max}}} \right) \right) \ ;$$

-  pour $k_{opt} / (k_{max} \cdot \sqrt{3}) < k/k_{max} < k_{opt}/k_{max}$ :

$$Vg \; = \; Vg_{nom} \; \cdot \; \left( \frac{1}{2} + \frac{\frac{1}{\sqrt{3}} - \frac{1}{2}}{\frac{1}{\sqrt{3}} - 1} \cdot \frac{k_{max}}{k_{opt}} \cdot \left( \frac{k}{k_{max}} - \frac{k_{opt}}{k_{max}} \right) \right) \; ;$$

- pour $k_{opt}/k_{max} < k/k_{max} < k_{opt} \cdot \sqrt{3} / k_{max}$ :

$$Vg \; = \; \frac{Vg_{nom}}{2} \; \cdot \; \left( 1 + \frac{\frac{2}{\sqrt{3}} - 1}{\sqrt{3} - 1} \cdot \frac{k_{max}}{k_{opt}} \cdot \left( \frac{k}{k_{max}} - \frac{k_{opt}}{k_{max}} \right) \right) \; ;$$

et

- pour $k_{opt} \cdot \sqrt{3} / k_{max} < k/k_{max}$ :

$$Vg \; = \; Vg_{nom} \; \cdot \; \left( \frac{1}{\sqrt{3}} + \frac{\sqrt{3} \cdot \left( \frac{k_{opt}}{k_{max}} + \frac{k_{max}}{k_{opt}} \right) - 4}{4\sqrt{3} \cdot \left( 1 - \frac{k_{opt}}{k_{max}} \cdot \sqrt{3} \right)} \cdot \left( \frac{k}{k_{max}} - \frac{k_{opt} \cdot \sqrt{3}}{k_{max}} \right) \right) \; .$$

On notera que les premier et deuxième tronçons ci-dessus peuvent être réunis en un seul. Dans ce cas, on obtient :

Pour $k/k_{max} < k_{opt}/k_{max}$ :

$$Vg \; = \; \frac{Vg_{nom}}{2} \; \cdot \; \left( 1 + \frac{k_{max}}{k_{opt}} \cdot \left( \frac{k_{opt}}{k_{max}} - \frac{k}{k_{max}} \right) \right) \; .$$

Bien entendu, le circuit mettant en oeuvre cette correction, qu'il s'agisse d'un réseau de résistances commutables ou d'un ou plusieurs transistors MOSFET dont on fait varier la résistance à l'état passant, devra tenir compte des niveaux d'énergie aux points de changement de coefficients pour respecter une correction continue sur toute la plage de fonctionnement.

Dans l'exemple de la figure 5, un cas particulier est celui où le point p5 est à un niveau de tension VC2 supérieur à celui du point p4. En pratique, cela signifie que le transpondeur ne reçoit une énergie suffisante que dans une plage de distances excluant l'hyperproximité, c'est-à-dire une relation de couplage où il est très proche de la borne. En d'autres termes, le système présente, à proximité de la borne, une zone dans laquelle le transpondeur ne peut pas recevoir une alimentation suffisante. Dans un tel cas, lors de la phase d'apprentissage, le lecteur s'aperçoit que le courant qu'il mesure dans la position où l'opérateur lui indique qu'un transpondeur est posé sur le lecteur, correspond au courant à vide. En d'autres termes, il ne détecte pas le transpondeur. On peut prévoir que le système d'apprentissage demande dans ce cas à l'opérateur d'écarter progressivement le transpondeur de la borne jusqu'à ce qu'il le détecte. Cette position est alors prise pour la position de couplage maximal p4.

Comme cela a été indiqué précédemment, le coefficient $k_{max}$ peut être situé à n'importe quel endroit de la caractéristique de la figure 3.

La figure 6 représente la caractéristique VC2 = $f(k/k_{max})$ dans le cas où celle-ci est monotone, c'est-à-dire dans le cas où l'apprentissage a déterminé que le courant $I_{vide}$ est inférieur au double du courant $I_{max}$ (voir la formule 12 plus haut). Cela signifie notamment que la position de couplage optimal (p1 en pointillés en figure 6) n'est jamais dépassée. Dans ce cas, la correction de la valeur nominale $Vg_{nom}$ comporte deux tronçons (si, comme cela est représenté, le point p3 est entre les points p5 et p4), voire un seul tronçon (si le point p4 est atteint avant le point p3), qui se déduisent de -ce qui a été exposé ci-dessus en relation avec la figure 5. En effet, toutes les formules exposées précédemment restent valables.

Dans le cas où $k_{opt}/k_{max}$ est supérieur à $\sqrt{3}$, le tronçon unique est, par exemple :

$$Vg = Vg_{nom} \cdot \left( \frac{\dfrac{k_{opt}}{k_{max}} + \dfrac{k_{max}}{k_{opt}}}{4} + \left( \frac{\dfrac{k_{opt}}{k_{max}} + \dfrac{k_{max}}{k_{opt}}}{4} - 1 \right) \cdot \left( \frac{k}{k_{max}} - 1 \right) \right) \cdot$$

Dans le cas où $k_{opt}/k_{max}$ est inférieur à $\sqrt{3}$, on peut établir, par exemple :

-   pour $k/k_{max} < k_{opt} / (k_{max} \cdot \sqrt{3})$ :

$$Vg = Vg_{nom} \cdot \left( \frac{1}{\sqrt{3}} + \frac{1 - \dfrac{1}{\sqrt{3}}}{\dfrac{1}{\sqrt{3}}} \cdot \frac{k_{max}}{k_{opt}} \cdot \left( \frac{k_{opt}}{k_{max} \cdot \sqrt{3}} - \frac{k}{k_{max}} \right) \right) \; ;$$

et

-   pour $k/k_{max} > k_{opt} / (k_{max} \cdot \sqrt{3})$ :

$$Vg = Vg_{nom} \cdot \left( \frac{\dfrac{k_{opt}}{k_{max}} + \dfrac{k_{max}}{k_{opt}}}{4} + \frac{\dfrac{1}{\sqrt{3}} - \dfrac{\dfrac{k_{opt}}{k_{max}} + \dfrac{k_{max}}{k_{opt}}}{4}}{\dfrac{k_{opt}}{k_{max} \cdot \sqrt{3}} - 1} \cdot \left( \frac{k}{k_{max}} - 1 \right) \right) \cdot$$

Enfin, dans le cas particulier où $k_{opt} = k_{max}$, les deux tronçons ci-dessus deviennent :

-   pour $k/k_{max} < 1 / \sqrt{3}$ :

$$Vg = Vg_{nom} \cdot \left( \frac{1}{\sqrt{3}} + \frac{1 - \dfrac{1}{\sqrt{3}}}{\dfrac{1}{\sqrt{3}}} \cdot \left( \frac{1}{\sqrt{3}} - \frac{k}{k_{max}} \right) \right) \; ;$$

et

-   pour $k/k_{max} > 1 / \sqrt{3}$ :

$$Vg = Vg_{nom} \cdot \left( \frac{1}{2} + \frac{\frac{1}{\sqrt{3}} - \frac{1}{2}}{\frac{1}{\sqrt{3}} - 1} \cdot \left( \frac{k}{k_{max}} - 1 \right) \right).$$

On notera que, bien qu'elles ne les mentionnent pas, toutes les relations ci-dessus de $Vg = f(k/k_{max})$ sont bien entendu valables aux points d'extrémités des tronçons.

On notera également que, dans tous les cas, le courant à vide $I_{vide}$ doit, lors de l'apprentissage, être supérieur ou égal au courant au couplage maximal $I_{max}$, un courant à vide inférieur constituant un cas impossible.

Une fois la phase d'apprentissage terminée (mesures de $I_{vide}$ et $I_{max}$, de $VC1_{vide}$ et $VC1_{max}$, et calcul des coordonnées et pentes de la caractéristique $Vg = f(k/k_{max})$), la borne est prête à fonctionner en asservissant l'énergie d'excitation en fonction du couplage. Pour ce faire, la borne mesure (à intervalles de temps réguliers plus ou moins longs selon le temps nécessaire à l'exploitation des mesures et le temps de réaction souhaité) le courant I dans son circuit oscillant et la tension VC1 aux bornes de la capacité C1 (élément 24) de ce circuit. Selon l'invention, ces seules mesures suffisent à adapter la tension de générateur Vg (ou en variante la valeur de la résistance R1).

En effet, on sait que la partie imaginaire $X1_{app}$ de l'impédance apparente $Z1_{app}$ peut s'exprimer sous la forme :

$$X1_{app} = X1 - a^2 \cdot X2, \qquad \text{(formule 15)}$$

avec :

$$X1 = \omega \cdot L1 - \frac{1}{\omega \cdot C1}. \qquad \text{(formule 16)}$$

Or, grâce à la régulation de phase, cette partie imaginaire $X1_{app}$ est nulle. Par conséquent :

$$X1 = a^2 \cdot X2. \qquad \text{(formule 17)}$$

On peut exprimer la différence entre les valeurs courantes et à vide de la façon suivante :

$$X1 - X1_{vide} = a^2 \cdot X2 - a_{vide}^2 \cdot X2. \qquad \text{(formule 18)}$$

Or, le coefficient $a_{vide}$ correspondant à la valeur au point p6 est nul (le couplage $k_{vide}$ est nul). De plus, la tension VC1 aux bornes de l'élément 24 (en négligeant l'influence du transformateur d'intensité 23) peut s'écrire $I/\omega C1$, I étant, par exemple, mesuré par le transformateur 23. Il en découle que la formule 18 ci-dessus peut s'écrire :

$$a^2 \cdot X2 = \frac{VC1_{vide}}{I_{vide}} - \frac{VC1}{I}. \qquad \text{(formule 19)}$$

En exprimant le rapport des expressions de la formule 18 appliquée à la valeur courante et au couplage maximal, et en les reportant dans la formule 19 ci-dessus, on peut écrire :

$$\frac{a^2 \cdot X2}{a_{max}^2 \cdot X2} = \frac{\dfrac{VC1_{vide}}{I_{vide}} - \dfrac{VC1}{I}}{\dfrac{VC1_{vide}}{I_{vide}} - \dfrac{VC1_{max}}{I_{max}}}. \qquad \text{(formule 20)}$$

Or, en appliquant la formule 3 à la formule ci-dessus, on obtient :

$$\frac{a^2 \cdot X2}{a_{max}^2 \cdot X2} = \frac{k^2}{k_{max}^2}. \qquad \text{(formule 21)}$$

Ainsi, le rapport $k/k_{max}$ entre les coefficients de couplage courant et maximal peut s'exprimer, quand un transpondeur est présent dans le champ de la borne, sous la forme :

$$\frac{k}{k_{max}} = \sqrt{\frac{\dfrac{VC1}{I} - \dfrac{VC1_{vide}}{I_{vide}}}{\dfrac{VC1_{max}}{I_{max}} - \dfrac{VC1_{vide}}{I_{vide}}}}. \qquad \text{(formule 22)}$$

Or, les valeurs du courant I et de la tension VC1 à vide et au couplage maximal ont été mesurées lors de la phase d'apprentissage. Par conséquent, il suffit de mesurer I et VC1 courants pour déterminer le rapport $k/k_{max}$ et appliquer l'une des fonctions Vg = f($k/k_{max}$) décrite ci-dessus, selon que le système a été déterminé lors de l'apprentissage, comme étant à réponse monotone ou non.

La mise en oeuvre de l'invention fait appel aux circuits numériques de commande de la borne en ce qu'il est nécessaire de stocker des mesures et d'effectuer des calculs sur ces mesures. Ces circuits qui n'ont pas été détaillés en figure 2 sont compris dans le bloc 4 de la figure 1. On pourra avoir recours à des calculateurs dédiés réalisés en logique câblée ou, pour bénéficier de capacités d'adaptation, à des moyens logiciels programmant un microprocesseur du bloc 4.

On notera que d'autres moyens pourront être utilisés pour polariser un élément capacitif variable 24. L'important est de disposer d'une information proportionnelle à la commande en régulation de phase.

En appliquant le procédé d'apprentissage et de détermination exposé précédemment, on mesure (à l'aide du transformateur 23) le courant I dans le circuit oscillant à la fois à vide et en posant un transpondeur sur la borne pour être au couplage maximal. On obtient les valeurs $I_{vide}$ et $I_{max}$ que l'on mémorise .en même temps que les valeurs $VC1_{vide}$ et $VC1_{max}$ correspondantes. On notera donc que, bien qu'on ait fait référence, par souci de clarté, à la valeur du coefficient de couplage k, il pourra s'agir en fait des grandeurs dont il dépend. Ces grandeurs pourront alors être traitées directement en remplaçant le couplage k par son expression fonction de ces grandeurs dans les formules exposées ci-dessus.

Un avantage de la présente invention est qu'elle permet d'adapter la puissance d'émission du lecteur à la position du transpondeur. On peut alors optimiser la consommation d'énergie du lecteur en réduisant celle-ci quand un transpondeur se trouve près du couplage optimal. On optimise également la portée du système en permettant une émission d'énergie importante quand un transpondeur se trouve loin de la borne sans risquer d'endommager celui-ci car cette énergie est diminuée au fur et à mesure que le transpondeur se rapproche de la borne.

Un autre avantage de la présente invention est qu'elle s'affranchit des problèmes liés à la réponse non monotone d'un transpondeur en fonction du couplage.

Un autre avantage de l'invention est que l'on peut prévoir une borne de lecture qui puisse être adaptée à différentes familles de transpondeurs, que ce soit lors de sa fabrication, de son installation, ou d'une opération sur site. Il suffit pour cela d'utiliser les moyens informatiques généralement présents dans la borne et de prévoir un programme de configuration de cette borne à une famille de transpondeurs donnée.

Un autre avantage de la présente invention est qu'elle est indépendante du transpondeur. En effet, aucune modification structurelle d'un transpondeur n'est nécessaire pour la mise en oeuvre de l'invention. Par conséquent, une borne de lecture de l'invention peut être utilisée avec des transpondeurs classiques.

Bien entendu, la présente invention est susceptible de diverses variantes et modifications qui apparaîtront à l'homme de l'art. En particulier, la réalisation pratique du circuit de sélection (25, figure 2) et des moyens automatiques de détermination des grandeurs nécessaires à la mise en oeuvre de l'invention sont à la portée de l'homme du métier en fonction de l'application et des indications fonctionnelles données ci-dessus. De plus, on notera que d'autres types d'éléments capacitifs variables pourront être utilisés pourvu de respecter l'utilisation de l'information délivrée par la boucle de régulation de phase pour régler cet élément capacitif variable.

Parmi les applications de la présente invention, on signalera plus particulièrement les lecteurs (par exemple, les bornes ou portiques de contrôle d'accès, les distributeurs automatiques de produits, les terminaux d'ordinateurs, les terminaux téléphoniques, les téléviseurs ou décodeurs satellites, etc.) de cartes à puce sans contact (par exemple les cartes d'identification pour contrôle d'accès, les cartes porte-monnaie électroniques, les cartes de stockage d'informations sur le possesseur de la carte, les cartes de fidélité de consommateurs, les cartes de télévision à péage, etc.).

**Revendications**

1. Borne (1') de génération d'un champ électromagnétique propre à coopérer avec au moins un transpondeur (10) lorsque ce dernier entre dans ce champ et comprenant :

   un circuit oscillant (R1, L1, 24) propre à recevoir une tension d'excitation alternative haute fréquence ;
   des moyens pour déterminer une information courante relative au couplage magnétique (k) entre le transpondeur et la borne ;
   des moyens pour adapter la puissance du champ électromagnétique en fonction de ladite information courante au moins,

   **caractérisée en ce qu'**elle comporte en outre :

   des moyens de régulation de la phase du signal dans le circuit oscillant par rapport à une valeur de référence ; et
   des moyens pour mesurer une première grandeur fonction de la tension (VC1) aux bornes d'un élément capacitif (24) de son circuit oscillant et une deuxième grandeur fonction du courant (I) dans son circuit oscillant.

2. Borne selon la revendication 1, **caractérisée en ce qu'**elle comporte des moyens (4) pour déterminer et mémoriser des informations caractéristiques relatives au couplage dans plusieurs configurations déterminées de distance séparant le transpondeur (10) de la borne (1'), et pour tenir compte de ces informations caractéristiques dans l'adaptation de la puissance du champ en fonction de l'information courante (k).

3. Borne selon les revendications 1 et 2, **caractérisée en ce que** lesdites informations caractéristiques comprennent, entre autres :

   la tension ($VC1_{vide}$) aux bornes de l'élément capacitif (24) lorsque aucun transpondeur (10) n'est présent dans le champ de la borne (1') ;
   la tension ($VC1_{max}$) aux bornes de l'élément capacitif lorsqu'un transpondeur est dans une relation de proximité maximale ($k_{max}$) avec la borne ;
   le courant ($I_{vide}$) dans le circuit oscillant quand aucun transpondeur n'est présent dans le champ de la borne ; et
   le courant ($I_{max}$) dans le circuit oscillant quand un transpondeur est dans une relation de proximité maximale avec la borne.

4. Borne selon la revendication 3, **caractérisée en ce que** ladite information courante est déduite de la mesure courante desdites deux grandeurs et des valeurs desdites informations caractéristiques.

5. Borne selon l'une quelconque des revendications 2 à 4, **caractérisée en ce qu'**au moins une information caractéristique est déterminée automatiquement par la borne (1') dans une phase d'apprentissage.

6. Borne selon l'une quelconque des revendications 1 à 5, **caractérisée en ce que** les moyens pour adapter la puissance du champ électromagnétique comprennent des moyens commandables (25) pour modifier la tension d'excitation alternative (Vg) du circuit oscillant (R1, L1, 24) de la borne (1').

7. Borne selon l'une quelconque des revendications 1 à 5, **caractérisée en ce que** les moyens pour adapter la puissance du champ électromagnétique comprennent un ou plusieurs éléments résistifs (R1), commandables et faisant partie du circuit oscillant (R1, L1, 24) de la borne (1').

8. Borne selon l'une quelconque des revendications 1 à 7, **caractérisée en ce que** le temps de réponse des moyens de régulation de phase (21) est choisi pour être grand devant la fréquence d'une rétromodulation éventuelle provenant d'un transpondeur (10) présent dans le champ électromagnétique de la borne (1') et pour être rapide par rapport à la vitesse de déplacement d'un transpondeur dans ce champ électromagnétique.

9. Borne selon l'une quelconque des revendications 1 à 8, **caractérisée en ce que** ledit circuit oscillant (R1, L1, 24) comprend un élément (24) de capacité variable, ladite borne (1') comprenant des moyens (M) propres à fixer la valeur de cette capacité à partir d'une mesure de phase du signal dans le circuit oscillant en faisant varier la tension aux bornes de l'élément de capacité variable.

10. Procédé de commande d'une borne selon l'une quelconque des revendications 1 à 9, **caractérisé en ce qu'**il consiste à :

   a) dans une phase d'apprentissage :

      déterminer une première information caractéristique liée au courant ($I_{vide}$) dans le circuit oscillant quand aucun transpondeur n'est présent dans le champ de la borne ;
      déterminer une deuxième information caractéristique liée au courant ($I_{max}$) dans le circuit oscillant quand un transpondeur est dans une relation de proximité maximale avec la borne ;
      calculer des relations linéaires d'asservissement de la puissance du champ magnétique en fonction de ladite information courante et d'une valeur nominale prédéterminée ; et

   b) en fonctionnement :

      déterminer l'information courante liée au couplage (k) entre un transpondeur entré dans le champ de la borne et celle-ci ; et
      adapter la puissance du champ magnétique à partir desdites relations linéaires.

11. Procédé selon la revendication 10, **caractérisé en ce que** ladite information courante est fonction du rapport entre le coefficient de couplage magnétique courant et le coefficient de couplage magnétique maximal obtenu quand un transpondeur est dans une relation de proximité maximale avec la borne.

**Claims**

1. A terminal (1') for generating an electromagnetic field adapted to cooperating with at least one transponder (10) when the latter enters within said field and including:

   an oscillating circuit (R1, L1, 24) adapted to receiving a high frequency A.C. excitation voltage,
   means for determining a present information relative to the magnetic coupling (k) between the transponder and the terminal; and
   means for adapting the electromagnetic field power according to at least said present information;

   **characterized in that** it further comprises:

   means for regulating the signal phase in the oscillating circuit with respect to a reference value; and
   means for measuring a first quantity which is a function of the voltage (VC1) across a capacitive element (24) of said oscillating circuit and a second quantity which is a function of the current (I) in said oscillating circuit.

2. The terminal of claim 1, **characterized in that** it includes means (4) for determining and storing characteristic information relative to the coupling in several determined configurations of the distance separating the transponder (10) from the terminal (1'), and for taking account said characteristic information in the field power adaptation according to the present information (k).

3. The terminal of claims 1 and 2, **characterized in that** said characteristic information includes, among others:

   the voltage ($VC1_{off-load}$) across the capacitive element (24) when no transponder (10) is present in the field of the terminal (1');
   the voltage ($VC1_{max}$) across the capacitive element when a transponder is in a relation of maximum closeness ($k_{max}$) with the terminal;
   the current ($I_{off-load}$) in the oscillating circuit when no transponder is present in the field of the terminal; and
   the current ($I_{max}$) in the oscillating circuit when a transponder is in a relation of maximum closeness with the terminal.

4. The terminal of claim 3, **characterized in that** said present information is deduced from the present measurement of said two quantities and of the values of said characteristic information.

5. The terminal of any of claims 2 to 4,

**characterized in that** at least one characteristic information is automatically determined by the terminal (1') in a learning phase.

6. The terminal of any of claims 1 to 5,
   **characterized in that** the means for adapting the power of the electromagnetic field include means (25) controllable to modify the A.C. excitation voltage (Vg) of the oscillating circuit (R1, L1, 24) of the terminal (1').

7. The terminal of any of claims 1 to 5,
   **characterized in that** the means for adapting the power of the electromagnetic field include one or several controllable resistive elements (R1), belonging to the oscillating circuit (R1, L1, 24) of the terminal (1').

8. The terminal of any of claims 1 to 7,
   **characterized in that** the response time of the phase regulation means (21) is chosen to be large as compared to the frequency of a possible back-modulation coming from a transponder (10) present in the electromagnetic field of the terminal (1') and to be fast as compared to the displacement speed of a transponder in this electromagnetic field.

9. The terminal of any of claims 1 to 8,
   **characterized in that** said oscillating circuit (R1, L1, 24) includes an element (24) of variable capacitance, said terminal (1') including means (M) adapted to determining the value of this capacitance based on a phase measurement on the signal in the oscillating circuit by varying the voltage across the element of variable capacitance.

10. A method for controlling the terminal of any of claims 1 to 9, **characterized in that** it consists of:

    a) during a learning phase:

    determining a first characteristic information associated with the current ($I_{off-load}$) in the oscillating circuit when no transponder is present in the field of the terminal;
    determining a second characteristic information associated with the current ($I_{max}$) in the oscillating circuit when a transponder is in a relation of maximum closeness with the terminal;
    calculating linear relations of control of the magnetic field power according to said present information and to a predetermined nominal value; and

    b) in operation:

    determining the present information associated with the coupling (k) between a transponder that has entered the terminal's field and said terminal; and
    adapting the magnetic field power based on said linear relations.

11. The method of claim 10, **characterized in that** said present information is a function of the ratio between the present magnetic coupling coefficient and the maximum magnetic coupling coefficient obtained when a transponder is in a relation of maximum closeness with the terminal.

**Patentansprüche**

1. Anschlußvorrichtung (1') zum Erzeugen eines elektromagnetischen Feldes, die geeignet ist, mit zumindest einem Transponder (10) zusammenzuarbeiten, wenn dieser in das Feld eintritt, und die umfaßt:

   - einen Schwingkreis (R1, L1, 24), der eine hochfrequente Wechselstrom-Erregungsspannung empfangen kann;
   - Mittel zum Erfassen einer aktuellen Information bezüglich der magnetischen Kopplung (k) zwischen dem Transponder und der Anschlußvorrichtung;
   - Mittel zum Anpassen der elektrischen Feldleistung abhängig von zumindest der aktuellen Information;

   **dadurch gekennzeichnet, daß** die Anschlußvorrichtung ferner umfaßt:

   - Mittel zum Regeln der Signalphase in dem Schwingkreis im Hinblick auf einen Referenzwert; und

- Mittel zum Messen einer ersten Größe, die von der Spannung (VC1) abhängt, welche an einem kapazitiven Element (24) des Schwingkreises anliegt und einer zweiten Größe, die von dem Strom (I) in dem Schwingkreis abhängt.

2. Anschlußvorrichtung nach Anspruch 1, **dadurch gekennzeichnet, daß** diese Mittel (4) zum Erfassen und Speichern von charakteristischer Information bezüglich der Kopplung bei verschiedenen erfaßten Konfigurationen des Abstands zwischen dem Transponder (10) und der Anschlußvorrichtung (1') erfaßt, um diese charakteristischen Informationen bei der Anpassung der elektrischen Feldleistung in Abhängigkeit von der aktuellen Information (k) mit einzubeziehen.

3. Anschlußvorrichtung nach den Ansprüchen 1 und 2, **dadurch gekennzeichnet, daß** die charakteristische Information ferner umfaßt:

- die Spannung ($VC1_{Leerlauf}$), die an dem kapazitiven Element (24) anliegt, wenn kein Transponder (10) in dem Feld der Anschlußvorrichtung (1') vorliegt;
- die Spannung ($VC1_{max}$), die an dem kapazitiven Element anliegt, wenn der Transponder in der größten Nähe ($k_{max}$) zu der Anschlußvorrichtung angeordnet ist;
- den Strom ($I_{Leerlauf}$) in dem Schwingkreis, wenn kein Transponder in dem Feld der Anschlußvorrichtung vorliegt; und
- den Strom ($I_{max}$) in dem Schwingkreis, wenn der Transponder in größter Nähe zu der Anschlußvorrichtung angeordnet ist.

4. Anschlußvorrichtung nach Anspruch 3, **dadurch gekennzeichnet, daß** die vorliegende Information von der aktuellen Messung der zwei Größen und von den Werten der charakteristischen Information abgeleitet ist.

5. Anschlußvorrichtung nach einem der Ansprüche 2 bis 4, **dadurch gekennzeichnet, daß** durch die Anschlußvorrichtung (1') während einer Lernphase zumindest eine charakteristische Information automatisch ermittelt wird.

6. Anschlußvorrichtung nach einem der vorherigen Ansprüche, **dadurch gekennzeichnet, daß** die Mittel zum Anpassen der Leistung des elektromagnetischen Feldes steuerbare Mittel (25) umfassen, um die Wechselstrom-Erregungsspannung (Vg) des Schwingkreises (R1, L1, 24) der Anschlußvorrichtung (1') zu ändern.

7. Anschlußvorrichtung nach einem der Ansprüche 1 bis 5, **dadurch gekennzeichnet, daß** die Mittel zum Anpassen der Leisung des elektromagnetischen Feldes ein oder mehrere steuerbare Widerstandselemente (R1) umfassen, die Teil des Schwingkreises (R1, L1, 24) der Anschlußvorrichtung (1') sind.

8. Anschlußvorrichtung nach einem der vorherigen Ansprüche, **dadurch gekennzeichnet, daß** die Antwortzeit der Phasensteuermittel (21) so gewählt wird, daß sie lang im Vergleich zu der Frequenz einer möglichen von einem Transponder (10) stammenden Rückmodulation ist, wobei der Transponder in dem elektromagnetischen Feld der Anschlußvorrichtung (1') liegt, und schnell im Vergleich zu der Entfernungsgeschwindigkeit eines Transponders innerhalb dieses elektromagnetischen Feldes ist.

9. Anschlußvorrichtung nach einem der vorherigen Ansprüche, **dadurch gekennzeichnet, daß** der Schwingkreis (R1, L1, 24) ein Element (24) mit variabler Kapazität umfaßt, wobei die Anschlußvorrichtung (1') Mittel (M) umfaßt, die dafür geeignet sind, den Wert dieser Kapazität basierend auf einer Phasenmessung des Signals in dem Schwingkreis zu ermitteln, indem die Spannung, welche an dem Element mit variabler Kapazität anliegt, verändert wird.

10. Verfahren zum Steuern einer Anschlußvorrichtung nach einem der vorherigen Ansprüche 1 bis 9, **dadurch gekennzeichnet, daß** das Verfahren umfaßt:

a) während einer Lernphase:

Erfassen einer ersten charakteristischen Information, die mit dem Strom ($I_{Leerlauf}$) in dem Schwingkreis verknüpft ist, wenn in dem Feld der Anschlußvorrichtung kein Tansponder vorliegt;
Erfassen einer zweiten charakteristischen Information, die mit dem Strom ($I_{max}$) in dem Schwingkreis verknüpft ist, wenn ein Transponder in maximaler
Nähe zu der Anschlußvorrichtung angeordnet ist;

Berechnen linearer Rückkopplungsbeziehungen der magnetischen Feldleistung abhängig von der aktuellen Information und von einem vorgegebenen Nominalwert; und

b) im Betrieb:

Ermitteln der aktuellen Information, die mit der Kopplung (k) zwischen dem
Transponder, der in das Feld der Anschlußvorrichtung eingetreten ist und dieser Anschlußvorrichtung selbst verknüpft ist; und
Anpassen der magnetischen Feldleistung mittels der linearen Beziehungen.

**11.** Verfahren nach Anspruch 10, **dadurch gekennzeichnet, daß** die aktuelle Information von dem Verhältnis zwischen dem aktuellen magnetischen Kopplungskoeffizienten und dem maximalen magnetischen Kopplungskoeffizienten abhängt, der sich ergibt, wenn der Transponder in größter Nähe zu der Anschlußvorrichtung angeordnet ist.

Fig 1

Fig 2

Fig 3

Fig 4

Fig 5

Fig 6